# EUROPÄISCHE PATENTSCHRIFT

(11) **EP 3 730 587 B1**
(45) Veröffentlichungstag und Bekanntmachung des Hinweises auf die Patenterteilung: **08.12.2021**
(21) Anmeldenummer: 19171357.7
(22) Anmeldetag: 26.04.2019
(51) Int. Cl.: C09K 5/04, G01N 17/00

(54) **KÄLTEMITTEL**
COOLANT
AGENT RÉFRIGÉRANT

(43) Veröffentlichungstag der Anmeldung: 28.10.2020
(73) Patentinhaber: Weiss Technik GmbH, 35447 Reiskirchen (DE)
(72) Erfinder: BITZER, Jürgen, 72336 Balingen (DE); BRÄUER, Carsten, 72336 Balingen (DE); HECKELE, Tobias, 72336 Balingen (DE); TEICHMANN, Johannes, 72351 Geislingen (DE); LÖFFLER, Marc, 72336 Balingen (DE)
(74) Vertreter: advotec.

(56) Entgegenhaltungen:
- EP-A2- 0 344 397
- DE-A1-102017 012 212
- Weiss Technik ET AL: "Low Global Warming Potential Refrigerants - White Paper R-449A, A Low Global Warming Potential Refrigerant A New Option for Environmental Test Chambers That Helps Combat Climate Change White Paper 2018 Low Global Warming Potential Refrigerants - White Paper 2 Table of Contents", , 1. Januar 2018 (2018-01-01), XP055630397, Gefunden im Internet: URL:https://weiss-na.com/wp-content/upload s/R-449A-A-Low-Global-Warming-Potential-Re frigerant-White-Paper.pdf [gefunden am 2019-10-09]
- Danfoss: "Achieving sustainable HVAC/R through intelligent solutions, energy efficiency and", , 1. August 2018 (2018-08-01), XP055630406, Gefunden im Internet: URL:https://www.danfoss.com/media/7174/low -gwp-whitepaper.pdf [gefunden am 2019-10-09]

## Beschreibung

Die Erfindung betrifft ein Kältemittel für eine Kühleinrichtung sowie eine Prüfkammer mit dem Kältemittel und eine Verwendung eines Kältemittels, wobei das Kältemittel für eine Kühleinrichtung mit einem Kühlkreislauf mit zumindest einem Wärmeübertrager, in dem das Kältemittel eine Phasenänderung durchläuft, dient.

Derartige Kältemittel zirkulieren im Allgemeinen innerhalb eines geschlossenen Kühlkreislaufs von Kühleinrichtungen und erfahren nacheinander verschiedene Änderungen eines Aggregatzustandes. Dabei sollen Kältemittel so beschaffen sein, dass sie in einem Kühlkreislauf innerhalb einer vorgenannten Temperaturdifferenz verwendbar sind. Aus dem Stand der Technik sind sogenannte Einstoffkältemittel und auch Kältemittelgemische aus zumindest zwei Stoffen bekannt. Eine Benennung der Kältemittel erfolgt nach DIN 8960 Absatz 6 in der am Prioritätstage zuletzt gültigen Fassung.

Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder chlorierten Stoffe als Kältemittel eingesetzt werden, weshalb natürliche Kältemittel beziehungsweise Gase in Frage kommen. Darüber hinaus sollte ein Kältemittel nicht brennbar sein, um unter anderem eine Befüllung, einen Versand und einen Betrieb eines Kühlkreislaufs nicht aufgrund eventuell einzuhaltender Sicherheitsvorschriften zu erschweren. Auch verteuert sich die Herstellung eines Kühlkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 beziehungsweise der DIN 378 Klassen A2, A2L und A3 in der zuletzt am Prioritätstag gültigen Fassung fällt.

Darüber hinaus sollte ein Kältemittel ein relativ geringes CO₂-Äquivalent aufweisen, das heißt ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 100 Jahre festgelegt werden. Zur Definition des relativen CO₂-Äquivalents beziehungsweise GWPs wird auf den fünften Sachstandsbericht des Intergovernmental Panel on Climate Change (IPCC), Assessment Report, Appendix 8.A, Table 8.A.1 in der zuletzt am Prioritätstag gültigen Fassung verwiesen.

Nachteilig bei Kältemitteln mit geringem GWP, beispielsweise < 2500, ist, dass diese Kältemittel in den für einen Kühlkreislauf relevanten Temperaturbereichen eine teilweise deutlich verringerte Kälteleistung im Vergleich zu Kältemitteln mit vergleichsweise größerem GWP aufweisen.

Auch sollen Kältemittel möglichst einfach einsetzbar sein, d.h. keinen aufwendigen technischen Umbau einer Kühleinrichtung erfordern. Insbesondere bei Kältemitteln mit einem Temperaturglide > 3 K ist es erforderlich, ein Expansionsorgan und einen Wärmeübertrager bzw. Verdampfer des betreffenden Kühlkreislaufs an die Verdampfungstemperatur des Kältemittels anzupassen und eine entsprechende Regelung vorzusehen. Weiter ist zu unterscheiden zwischen Kältemitteln, die für einen statischen Betrieb einer Kühleinrichtung, d.h. einer Kühleinrichtung mit einer im Wesentlichen über einen längeren Zeitraum konstanten Temperatur am Wärmetauscher bzw. Verdampfer, und einer dynamischen Kühleinrichtung mit einem vergleichsweise schnellen Temperaturwechsel am Wärmeübertrager ausgebildet sind. Derartige dynamische Kühleinrichtungen sind unter anderem in Prüfkammern verbaut, so dass ein verwendetes Kältemittel innerhalb eines großen Temperaturbereichs einsetzbar sein muss.

Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -40°C bis +180°C eingestellt werden können. Bei Klimaprüfschränken können ergänzend gewünschte Klimabedingungen eingestellt werden, denen dann die Vorrichtung beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal beziehungsweise den Prüfraum durchströmenden Luft angeordnet sind. Dabei saugt ein Lüfter beziehungsweise ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervals kann dann eine Temperatur zwischen einem Temperaturmaximum und einem Temperaturminimum der Prüfkammer wiederholt wechseln. Eine derartige Prüfkammer ist beispielsweise aus der EP 0 344 397 A2 bekannt.

Aus DE10 2017 012 212 A1 sind Kältemittel und dessen Verwendung in Prüfkammern bekannt.

Das in einem Kühlkreislauf zirkulierende Kältemittel muss so beschaffen sein, dass es im Kühlkreislauf innerhalb der vorgenannten Temperaturdifferenz verwendbar ist. Insbesondere kann eine Taupunkttemperatur des Kältemittels nicht höher sein als eine minimale Temperatur des zu erreichenden Temperaturbereiches des Kühlkreislaufs, da sonst bei einem Verdampfen des Kältemittels in dem Wärmeübertrager, der zur Kühlung des Prüfraums dient, die minimale Temperatur nicht erreichbar wäre. Die Taupunkttemperatur von azeotropischen Kältemitteln wird unmittelbar nach dem Expansionsorgan in dem Wärmeübertrager erreicht.

Weiter sind Kühleinrichtungen bekannt, bei denen ein zeotropes Kältemittelgemisch sukzessive verdampft wird. Bei einem zeotropen Kältemittelgemisch erfolgt ein Phasenübergang über einen Temperaturbereich, den sogenannten Temperaturglide. Als Temperaturglide wird dabei eine Differenz zwischen der Siedetemperatur und der Taupunkttemperatur bei konstantem Druck angesehen. Das heißt Stoffkomponenten des Kältemittels werden nacheinander über ein Expansionsorgan verdampft.

Weiter ist es bekannt, das zeotrope Kältemittel R449A als Kältemittel für Kühleinrichtungen von Prüfkammern zu verwenden. Dieses Kältemittel ist ein Kältemittelgemisch bzw. ein Gemisch aus einem Masseanteil R134A von 26,1 Masseprozent, einem Masseanteil R1234YF von 24,9 Masseprozent, einem Masseanteil R125 von 25,1 Masseprozent und einem Masseanteil R32 von 23,9 Masseprozent. Bei einstufigen Kühleinrichtungen mit alleine einem Kühlkreislauf ist regelmäßig ein Erreichen von tiefen Temperaturen, beispielsweise -42°C, kaum möglich. Es ist daher erforderlich, einen Verdampfungsdruck abzusenken, um die gewünschte tiefe Temperatur zu erzielen. Bei höheren Umgebungstemperaturen bzw. Kondensationstemperaturen wird die tiefe Temperatur jedoch nur sehr langsam bzw. überhaupt nicht erreicht. Darüber hinaus ist eine Abkühlgeschwindigkeit, die mit der Kühleinrichtung erzielt wird, in einem unteren Temperaturbereich deutlich vermindert.

Der vorliegenden Erfindung liegt daher die Aufgabe zugrunde, ein Kältemittel für eine einstufige oder zweistufige Kühleinrichtung, eine Prüfkammer mit einem Kältemittel sowie eine Verwendung eines Kältemittels vorzuschlagen, mit dem beziehungsweise der Temperaturen bis mindestens -40°C umweltfreundlich und sicher erzielbar sind.

Diese Aufgabe wird durch ein Kältemittel mit den Merkmalen des Anspruchs 1, eine Prüfkammer mit den Merkmalen des Anspruchs 10 und eine Verwendung eines Kältemittels mit den Merkmalen des Anspruchs 16 gelöst.

Bei dem erfindungsgemäßen Kältemittel für eine Kühleinrichtung mit einem Kühlkreislauf mit zumindest einem Wärmeübertrager durchläuft das Kältemittel eine Phasenänderung, wobei das Kältemittel ein Gemisch aus einem Masseanteil des Kältemittelgemischs R449A und einem Masseanteil mindestens eines weiteren Kältemittelgemischs ist, wobei der Masseanteil R449A an dem Kältemittel 30 bis 70 Masseprozent beträgt, wobei der Masseanteil des weiteren Kältemittelgemischs an dem Kältemittel 30 bis 70 Masseprozent beträgt, wobei das weitere Kältemittelgemisch das Kältemittelgemisch R410A oder das Kältemittelgemisch R466A ist.

Das Kältemittelgemisch R410A besteht aus dem Kältemittel R32 mit einem Masseanteil von 50 Masseprozent und dem Kältemittel R125 mit einem Masseanteil von 50 Masseprozent. Das Kältemittelgemisch R466A besteht aus dem Kältemittel R32 mit einem Masseanteil von 49 Masseprozent, dem Kältemittel R125 mit einem Masseanteil von 11,5 Masseprozent und dem Kältemittel CF31 (Trifluordimethan) mit einem Masseanteil von 39,5 Masseprozent. Weiter ist Kohlendioxid (CO₂) auch als Kältemittel bzw. Komponente unter der Bezeichnung R744, Pentafluorethan (C₂HF₅) unter der Bezeichnung R125, Difluormethan (CH₂F₂) unter der Bezeichnung R32, 2,3,3,3-Tetraflourpropen (C₃H₂F₄) unter der Bezeichnung R1234YF, 1,1,1,2-Tetraflourethan (C₂H₂F₄) unter der Bezeichnung R134A, Fluormethan (CH₃F) unter der Bezeichnung R41, Ethan (C₂H₆) unter der Bezeichnung R170, 1,1-Difluorethen (C₂H₂F₂) unter der Bezeichnung R1132A, Ethen (C₂H₄) unter der Bezeichnung R1150, Fluorethen (C₂H₃F) unter der Bezeichnung R1141, Propan (C₃H₈) unter der Bezeichnung R290, Propen (C₃H₆) unter der Bezeichnung R1270 und Fluorethan (CH₂FCH₃) unter der Bezeichnung R161 gemäß DIN 8960 in der zuletzt gültigen Fassung der dem Prioritätstag der Anmeldung bekannt.

Erfindungsgemäß ist das Kältemittel ein Gemisch aus dem Kältemittelgemisch R449A mit einem der Kältemittelgemische R410A oder R466A. Dadurch wird es möglich, eine tiefe Temperatur von beispielsweise -42°C bei einstufigen Kühleinrichtungen sicher und schnell zu erreichen. Ein Kondensationsdruck wird zwar erhöht, jedoch kann ein Temperaturgleit des zeotropen Kältemittels gesenkt werden. Ein GWP wird auch erhöht, jedoch steigt dieser nicht über einen Wert von 2000. Mit dem erfindungsgemäßen Kältemittel können in einer einstufigen Kühleinrichtung zuverlässig Temperaturen von -45°C bis -50°C erreicht werden und das Kältemittel ist darüber hinaus auch für zweistufige Kühleinrichtungen nutzbar, wobei Temperaturen von -55°C bis -60°C erreicht werden können. Gleichzeitig ist es möglich, das Kältemittel besonders einfach herzustellen, da lediglich zwei leicht verfügbare Kältemittelgemische in dem angegebenen Verhältnis gemischt werden müssen, um das erfindungsgemäße Kältemittel zu erhalten. Eine aufwendige Zusammenstellung und Dosierung einer größeren Anzahl von Kältemitteln zu einem Gemisch ist nicht erforderlich.

Der Masseanteil R449A kann 40 bis 60 Masseprozent betragen, wobei der Masseanteil des weiteren Kältemittelgemischs 40 bis 60 Masseprozent betragen kann. Ein Temperaturgleit kann so noch weitere verringert werden und eine Abkühlgeschwindigkeit in einem unteren Temperaturbereich kann erhöht werden.

Vorteilhaft kann der Masseanteil R449A 45 bis 55 Masseprozent betragen, wobei der Masseanteil des weiteren Kältemittelgemischs 45 bis 55 Masseprozent betragen kann. So ist es dann auch möglich, bei aktuell vorhandenen Kühleinrichtungen das Kältemittelgemisch R449A zum Teil durch das weitere Kältemittelgemisch zu ersetzen. Eine vollkommene Entleerung des betreffenden Kühlkreislaufs ist dann nicht erforderlich. Der teilweise Ersatz des Kältemittelgemischs R 449A kann beispielsweise einfach im Rahmen eines Serviceintervalls erfolgen.

Besonders vorteilhaft ist es, wenn der Masseanteil R449A 50 Masseprozent beträgt und der Masseanteil des weiteren Kältemittelgemischs 50 Masseprozent beträgt. Beispielsweise kann dann auch ein Expansionsorgan des Kühlkreislaufs weiter verwendet werden bzw. es bedarf keiner besonderen Einstellung an dem Expansionsorgan bei einer Verwendung oder einem Austausch des Kältemittels.

Das Kältemittel kann als eine zusätzliche Komponente Kohlendioxid, Difluormethan, Pentafluorethan, 2,3,3,3-Tetrafluorpropen, 1,1,1,2-Tetrafluorethan, Fluormethan, Ethan, 1,1-Difluorethen, Ethen, Fluorethen, Ethin, Propan, Propen und/oder Fluorethan mit vorzugsweise jeweils bis zu 10 Masseprozent aufweisen. Eine Gefriertemperatur des Kältemittelgemischs kann durch die Zugabe einer oder mehrerer der genannten Komponenten weiter reduziert werden. Die Reduktion des GWP kann dabei derart eingestellt werden, dass zum einen der Gefrierpunkt etwas niedriger ist als die angestrebte Verdampfungstemperatur und gleichzeitig der zu der Verdampfungstemperatur gehörige Dampfdruck, der über oder nur gering unter dem Umgebungsdruck liegen sollte.

Das Kältemittel kann ein zeotropes Kältemittel sein. Da ein Temperaturgleit bei dem Kältemittel vergleichsweise verringert werden kann, wirken sich die zeotropen Eigenschaften des Kältemittels kaum negativ auf eine erzielbare Temperaturkonstanz aus.

Das Kältemittel kann einen Temperaturgleit in einem Bereich von 3 K bis 9 K, bevorzugt von 3 K bis 6 K aufweisen. Dieser Temperaturgleit kann bei einem Verdampfungsdruck von 2 bis 3 bar auftreten. Bei einem Gemisch von R449A mit 50 Masseprozent und R410A mit 50 Masseprozent beträgt ein Temperaturgleit beispielsweise 4,3 K.

Das Kältemittel kann ein relatives CO₂-Äquivalent, bezogen auf 100 Jahre von < 1700, bevorzugt von < 1070, besonders bevorzugt von < 900 aufweisen. Folglich kann das Kältemittel wenig umweltschädigend sein.

Das Kältemittel kann nicht brennbar sein. Wenn das Kältemittel nicht brennbar ist, wird es möglich, den Kühlkreislauf und insbesondere eine Prüfkammer kostengünstiger auszubilden, da keine besonderen Sicherheitsvorkehrungen hinsichtlich Brennbarkeit des Kältemittels zu beachten sind. Das Kältemittel kann dann zumindest nicht der Brandklasse C zugeordnet werden und erfüllt somit die Kältemittelsicherheitsgruppe A1. Darüber hinaus wird ein Versand beziehungsweise ein Transport des Kühlkreislaufs vereinfacht, da der Kühlkreislauf bereits vor einem Transport, unabhängig von der Transportart mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung des nicht brennbaren Kältemittels bei vorhandenen Zündquellen möglich.

Die erfindungsgemäße Prüfkammer zur Konditionierung von Luft umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -42°C bis +180 °C innerhalb des Prüfraums ausbildbar ist, wobei die Temperiervorrichtung eine Kühleinrichtung mit einem Kühlkreislauf mit einem erfindungsgemäßen Kältemittel, einem Wärmeübertrager, einem Verdichter, einem Kondensator und einem Expansionsorgan aufweist. Zu den Vorteilen der erfindungsgemäßen Prüfkammer wird auf die Vorteilsbeschreibung des erfindungsgemäßen Kältemittels verwiesen.

Mittels der Temperiervorrichtung kann eine Temperatur in einem Temperaturbereich von -45°C bis +180°C, bevorzugt -55°C bis +180°C, besonders bevorzugt -60°C bis +180°C, innerhalb des Prüfraums ausgebildet werden.

Die Kühleinrichtung kann einen weiteren Kühlkreislauf mit einem weiteren Kältemittel, einem weiteren Verdichter, einem weiteren Kondensator und einem weiteren Expansionsorgan aufweisen, wobei der weitere Kühlkreislauf mittels eines internen Wärmeübertragers mit dem Kondensator des Prüfkreislaufs gekoppelt sein kann. Folglich kann die Kühleinrichtung zwei in Reihe geschaltete Kreisläufe aufweisen, die eine sogenannte Kältekaskade ausbilden. Die weitere Kühleinrichtung bzw. der weitere Kühlkreislauf kann dann den Kondensator des ersten Kühlkreislaufs kühlen. So ist es dann möglich, im Prüfraum besonders niedrige Temperaturen auszubilden. Auch kann der Verdichter oder weitere Verdichter ein Kompressor sein.

Wenn die Kühleinrichtung zwei Kühlkreisläufe aufweist, können das Kältemittel und das weitere Kältemittel gleichartig sein. Das Kältemittel und das weitere Kältemittel sind dann identisch. Eine Befüllung der Kühlkreisläufe mit Kältemittel wird so wesentlich vereinfacht.

Alternativ kann der Kühlkreislauf als ein einstufiger Kühlkreislauf der Kühleinrichtung ausgebildet sein. Die Kühleinrichtung umfasst dann nur einen einzigen Kühlkreislauf, in dem das Kältemittel zirkulieren kann. Vorteilhaft kann dann bei einer Kühleinrichtung gegebenenfalls auf einem weiteren Kühlkreislauf verzichtet werden, da mit dem Kältemittel besonders tiefe Temperaturen erzielbar sind und ein weiterer Kühlkreislauf dann nicht erforderlich ist.

Der Wärmeübertrager kann derart dimensioniert ausgebildet sein, dass das Kältemittel nur teilweise in dem Wärmeübertrager verdampfen kann. Aufgrund zeotroper Eigenschaften des Kältemittels kann der Taupunkt bzw. der Ort der Taupunkttemperatur des Kältemittels aus dem Wärmeübertrager herausgeschoben werden und beispielsweise zur Unterkühlung des Kältemittels auf einer Hochdruckseite des Kühlkreislaufs vor dem Expansionsventil genutzt werden. Aufgrund eines Temperaturgleits des zeotropen Kältemittels kann bei dem teilweisen Verdampfen des Kältemittels in den Wärmeübertrager auch eine niedrigere Temperatur im Wärmeübertrager erzielt werden, als bei dem nachfolgenden, restlichen Verdampfen des Kältemittels auf einer Niederdruckseite des Kühlkreislaufs.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Wärmung der im Prüfung umgewälzten Luft gezielt gesteuert werden können, kann mittels der Temperiervorrichtung innerhalb des Prüfraums eine Temperatur in dem vorstehend angegebenen Temperaturbereich ausgebildet werden. Dabei kann unabhängig vom Prüfgut beziehungsweise eines Betriebszustandes des Prüfgutes eine zeitliche Temperaturkonstanz von ±1 K, vorzugsweise ±0,3 K bis ±0,5 K oder kleiner ±0,3 K während eines Prüfintervalls in dem Prüfraum ausgebildet werden. Unter einem Prüfintervall wird je ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist. Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Weitere Ausführungsformen einer Prüfkammer ergeben sich aus den Merkmalsbeschreibungen der auf den Erzeugnisanspruch 1 rückbezogenen Unteransprüche.

Bei der erfindungsgemäßen Verwendung eines Kältemittels besteht das Kältemittel aus einem Gemisch aus einem Masseanteil des Kältemittelgemischs R449A und einem Masseanteil mindestens eines weiteren Kältemittelgemischs, wobei der Masseanteil R449A an dem Kältemittel 30 bis 70 Masseprozent beträgt, wobei der Masseanteil des weiteren Kältemittelgemischs an dem Kältemittel 30 bis 70 Masseprozent beträgt, wobei das weitere Kältemittelgemisch das Kältemittelgemisch R410A oder das Kältemittelgemisch R466A ist, wobei das Kältemittel zur Konditionierung von Luft in einem gegenüber einer Umgebung verschließbaren und temperaturisolierten Prüfraum einer Prüfkammer zur Aufnahme von Prüfgut verwendet wird, wobei mittels einer Kühleinrichtung einer Temperiervorrichtung der Prüfkammer, mit einem Kühlkreislauf mit dem Kältemittel, einem Wärmeübertrager, einem Verdichter, einem Kondensator und einem Expansionsorgan, eine Temperatur in einem Temperaturbereich von -42°C bis +180°C, bevorzugt -55°C bis +180°C, besonders bevorzugt -60°C bis +180°C, innerhalb des Prüfraums ausgebildet wird. Zu den Vorteilen der Verwendung des Kältemittels wird auf die Vorteilsbeschreibung des erfindungsgemäßen Kältemittels verwiesen.

Besonders vorteilhaft ist es, wenn die Kühleinrichtung ausschließlich unterhalb des kritischen Punktes des Kältemittels betrieben wird. Wenn die Kühleinrichtung unterhalb des Tripelpunktes des Kältemittels betrieben wird, kann ein Erreichen eines überkritischen Zustands des Kältemittels ausgeschlossen werden. So ist es dann auch nicht erforderlich, die Kühleinrichtung für einen Betrieb im überkritischen Zustand auszubilden, wodurch Kosten zur Ausbildung der Kühleinrichtung eingespart werden können.

Das Kältemittel kann bei einem Saugdruck beziehungsweise Verdampfungsdruck in einem Druckbereich von 0,3 bis 5 bar absolut verdampft werden. Der Einsatz des Kältemittels innerhalb dieses Druckbereichs ermöglicht eine kostengünstige Ausbildung des Kühlkreislaufs, da dann keine besonderen, druckstabilen Baugruppen und Komponenten zur Ausbildung der Niederdruckseite des Kühlkreislaufs erforderlich sind.

Auch kann das Kältemittel bei einem Kondensationsdruck in einem Druckbereich von 5 bis 35 bar absolut kondensiert werden. Auch hier kann die Hochdruckseite dann mit Baugruppen und Komponenten ausgebildet werden, die nicht an vergleichsweise höhere Drücke angepasst sein müssen.

Weitere Ausführungsformen einer Verwendung ergeben sich aus den Merkmalsbeschreibungen der auf den Erzeugnisanspruch 1 rückbezogenen Unteransprüche.

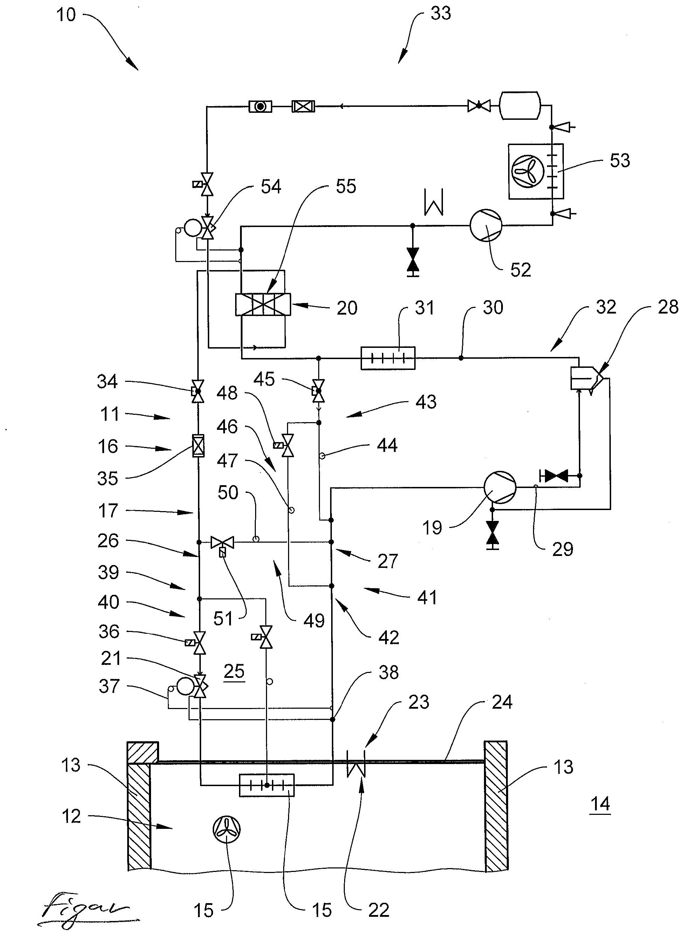

Nachfolgend wird eine bevorzugte Ausführungsform der Erfindung unter Bezugnahme auf die beigefügte Zeichnung näher erläutert.

Die **Figur** zeigt eine schematische Darstellung einer Prüfkammer 10 mit einem Schaltplan einer Temperiervorrichtung 11. Die Prüfkammer 10 umfasst einen hier nur abschnittsweise dargestellten Prüfraum 12, der durch temperaturisolierte Wände 13 gegenüber einer Umgebung 14 begrenzt und temperaturisoliert ist. Innerhalb des Prüfraums 12 ist ein Lüfter 15 angeordnet.

Die Temperiervorrichtung 11 umfasst eine Kühleinrichtung 16 mit einem Kühlkreislauf 17, innerhalb dem ein Kältemittel zirkulieren kann. Bei dem Kältemittel handelt es sich um ein Gemisch aus einem Masseanteil des Kältemittelgemischs R449A und einem Masseanteil mindestens eines weiteren Kältemittelgemischs, wobei der Masseanteil R449A an dem Kältemittel 30 bis 70 Masseprozent beträgt, wobei der Masseanteil des weiteren Kältemittelgemischs an dem Kältemittel 30 bis 70 Masseprozent beträgt, wobei das weitere Kältemittelgemisch das Kältemittelgemisch R410A oder das Kältemittelgemisch R466A ist. Alternativ können auch Kältemittel verwendet werden, die sich aus den Merkmalsbeschreibungen der auf den Erzeugnisanspruch 1 rückbezogenen Unteransprüche ergeben. Weiter umfasst die Kühleinrichtung 16 einen Wärmeübertrager 18, der in dem Prüfraum 12 angeordnet ist, einen Kompressor 19, einen Kondensator 20 und ein Expansionsorgan 21. In dem Prüfraum 12 ist darüber hinaus ein weiterer Wärmeübertrager 22 einer Heizeinrichtung 23 der Temperiervorrichtung 11 angeordnet. So kann mittels der Temperiervorrichtung 11 innerhalb des Prüfraums 12 eine Temperatur in einem Temperaturbereich von -42°C bis +180°C und auch von -70°C bis +180°C ausgebildet werden. Eine Linie 24 zeigt eine räumliche Trennung zwischen einem Maschinenraum 25 und dem Prüfraum 12 an.

Der Kühlkreislauf 17 weist eine Hochdruckseite 26, die in Strömungsrichtung des Kältemittels vom Kompressor 19 zum Expansionsorgan 21 sowie eine Niederdruckseite 27, die vom Expansionsorgan 21 zum Kompressor 19 verläuft, auf. Im Kühlkreislauf 17, dem Kompressor 19 nachgeordnet, sind eine Ölabscheideeinrichtung 28 und ein Temperatorsensor 29 angeordnet. Im weiteren Verlauf des Kühlkreislaufs 17 nachfolgend der Ölabscheideeinrichtung 28 ist ein Drucksensor 30 angeordnet und dem nachfolgend ein Gaskühler 31. In einem Rohrabschnitt 32 vom Kompressor 19 bis zum Gaskühler 31 ist das Kältemittel gasförmig und weist eine vergleichsweise hohe Temperatur auf. Das von dem Kompressor 19 verdichtete Kältemittel fließt in dem Kühlkreislauf 17 zu dem Kondensator 20, der hier über einen weiteren Kühlkreislauf 33 gekühlt wird, derart, dass das gasförmige Kältemittel in dem Kondensator 20 verflüssigt wird. In Fließrichtung des Kältemittels folgen in dem Kühlkreislauf 17 nach dem Kondensator 20 ein Absperrventil 34 und ein Filtertrockner 35 zum Filtern und Trocknen des Kältemittels. Das Kältemittel gelangt danach in dem Kühlkreislauf 17 an ein Magnetventil 36 und das Expansionsorgan 21, welches über einen druckbeaufschlagten Rohrabschnitt 37 und einen Temperatursensor 38 selbstregelnd ausgebildet ist. In einem Rohrabschnitt 39 des Kühlkreislaufs 17 liegt das Kältemittel demnach im flüssigen Aggregatzustand vor. Das in Bezug auf den Wärmeübertrager 18 und den Kompressor 19 in einem Vorlauf 40 angeordnete Expansionsorgan 21 wird folglich über den Rohrabschnitt 37 und den Temperatursensor 38, welche mit einem Rücklauf 41 des Kühlkreislaufs 17 verbunden sind, geregelt. Durch die Expansion des Kältemittels nachfolgend dem Expansionsorgan 21 erfolgt eine Kühlung des Wärmeübertragers 18, wobei das Kältemittel in den gasförmigen Aggregatzustand übergeht und über den Rücklauf 41 bzw. einem Rohrabschnitt 42 zum Kompressor 19 geleitet wird.

In dem Kühlkreislauf 17 sind weiter ein erster Bypass 43 mit einem Drosselorgan 44 und einem Absperrventil 45 angeordnet. Der erste Bypass 43 überbrückt den Kompressor 19, so dass bei einem Stillstand des Kompressors 19 ein allmählicher Druckausgleich zwischen der Hochdruckseite 26 und der Niederdruckseite 27 über das Drosselorgan 44 erfolgt.

Ein zweiter Bypass 46 mit einem Drosselorgan 47 und einem Magnetventil 48 ist hier an den ersten Bypass 43 angeschlossen und überbrückt ebenfalls den Kompressor 19 vor dem Kondensator 20 und nachfolgend dem Gaskühler 31. Über das Magnetventil 28 kann dann Kältemittel von der Hochdruckseite 26 zur Niederdruckseite 27 strömen und so dosiert werden, dass eine Sauggastemperatur und ein Sauggasdruck in dem Rohrabschnitt 42 vor dem Kompressor 19 in dem für das Kältemittel optimalen Bereich liegen. Der erste Bypass 43 dient somit zum Überströmen von kaltem, expandierendem gasförmigem Kältemittel bei einem Anlagenstillstand und damit zum Druckausgleich. Der zweite Bypass 46 dient zum Überströmen von vergleichsweise heißem, gasförmigem Kältemittel in den Rücklauf 41 zur Regelung einer Sauggastemperatur vor dem Kompressor 19. Eine Sauggastemperatur kann hier ≤ 30 °C betragen.

Ein dritter Bypass 49 greift nachfolgend dem Kondensator 20 bzw. dem Filtertrockner 35 in den Kühlkreislauf 17 ein, derart, dass das Expansionsorgan 21 überbrückt wird, wobei über ein Drosselorgan 50 und ein Magnetventil 51 Kältemittel von der Hochdruckseite 26 zur Niederdruckseite 27 so dosierbar ist, dass eine Sauggastemperatur bzw. ein Sauggasdruck des Kältemittels auf der Niederdruckseite 27 vor dem Kompressor 19 regelbar ist. Im Gegensatz zum zweiten Bypass 46 ist das über den dritten Bypass 49 zudosierte Kältemittel flüssig, was insbesondere eine Absenkung der Sauggastemperatur in dem Rücklauf 41 nach Regelung durch das Magnetventil 51 erlaubt.

Der weitere Kühlkreislauf 33 umfasst einen weiteren Verdichter 52, einen weiteren Kondensator 53 und ein weiteres Expansionsorgan 54 sowie einen internen Wärmeübertrager 55, mittels dem eine Kühlung des Kondensators 20 bewerkstelligt wird.

## Patentansprüche

1. Kältemittel für eine Kühleinrichtung (16) mit einem Kühlkreislauf (17, 33) mit zumindest einem Wärmeübertrager (18, 55), in dem das Kältemittel eine Phasenänderung durchläuft,
**dadurch gekennzeichnet,**
**dass** das Kältemittel ein Gemisch aus einem Masseanteil des Kältemittelgemischs R449A und einem Masseanteil mindestens eines weiteren Kältemittelgemischs ist, wobei der Masseanteil R449A an dem Kältemittel 30 bis 70 Masseprozent beträgt, wobei der Masseanteil des weiteren Kältemittelgemischs an dem Kältemittel 30 bis 70 Masseprozent beträgt, wobei das weitere Kältemittelgemisch das Kältemittelgemisch R410A oder das Kältemittelgemisch R466A ist.

2. Kältemittel nach Anspruch 1,
**dadurch gekennzeichnet,**
**dass** der Masseanteil R449A 40 bis 60 Masseprozent beträgt, wobei der Masseanteil des weiteren Kältemittelgemischs 40 bis 60 Masseprozent beträgt.

3. Kältemittel nach Anspruch 2,
**dadurch gekennzeichnet,**
**dass** der Masseanteil R449A 45 bis 55 Masseprozent beträgt, wobei der Masseanteil des weiteren Kältemittelgemischs 45 bis 55 Masseprozent beträgt.

4. Kältemittel nach Anspruch 3,
**dadurch gekennzeichnet,**
**dass** der Masseanteil R449A 50 Masseprozent beträgt, wobei der Masseanteil des weiteren Kältemittelgemischs 50 Masseprozent beträgt.

5. Kältemittel nach einem der Ansprüche 1 bis 3,
**dadurch gekennzeichnet,**
**dass** das Kältemittel als eine zusätzliche Komponente Kohlendioxid (CO₂), Difluormethan (CH₂F₂), Pentafluorethan (C₂HF₅), 2,3,3,3-Tetraflourpropen (C₃H₂F₄), 1,1,1,2-Tetraflourethan (C₂H₂F₄), Fluormethan (CH₃F), Ethan (C₂H₆), 1,1-Difluorethen (C₂H₂F₂), Ethen (C₂H₄), Fluorethen (C₂H₃F), Ethin (C₂H₂), Propan (C₃H₈), Propen (C₃H₆) und/oder Fluorethan (CH₂FCH₃) aufweist.

6. Kältemittel nach einem der vorangehenden Ansprüche,
**dadurch gekennzeichnet,**
**dass** das Kältemittel ein zeotropes Kältemittel ist.

7. Kältemittel nach einem der vorangehenden Ansprüche,
**dadurch gekennzeichnet,**
**dass** das Kältemittel einen Temperaturglide in einem Bereich von 3 K bis 9 K, bevorzugt von 3 K bis 6 K aufweist.

8. Kältemittel nach einem der vorangehenden Ansprüche,
**dadurch gekennzeichnet,**
**dass** das Kältemittel ein relatives CO2-Äquivalent, bezogen auf 100 Jahre, von < 1700, bevorzugt von < 1070, besonders bevorzugt von < 900 aufweist.

9. Kältemittel nach einem der vorangehenden Ansprüche,
**dadurch gekennzeichnet,**
**dass** das Kältemittel nicht brennbar ist.

10. Prüfkammer (10) zur Konditionierung von Luft, umfassend einen gegenüber einer Umgebung (14) verschließbaren und temperaturisolierten Prüfraum (12) zur Aufnahme von Prüfgut, und eine Temperiervorrichtung (11) zur Temperierung des Prüfraums, wobei mittels der Temperiervorrichtung eine Temperatur in einem Temperaturbereich von -42 °C bis +180 °C innerhalb des Prüfraums ausbildbar ist, wobei die Temperiervorrichtung eine Kühleinrichtung (16) mit einem Kühlkreislauf (17, 33) mit einem Kältemittel nach einem der vorangehenden Ansprüche, einem Wärmeübertrager (18, 55), einem Verdichter (19, 52), einem Kondensator (20, 53) und einem Expansionsorgan (21, 54) aufweist.

11. Prüfkammer nach Anspruch 10,
**dadurch gekennzeichnet,**
**dass** die Kühleinrichtung (16) einen weiteren Kühlkreislauf (33) mit einem weiteren Kältemittel, einem weiteren Verdichter (52), einem weiteren Kondensator (53), und einem weiteren Expansionsorgan (54) aufweist, wobei der weitere Kühlkreislauf mittels eines internen Wärmeübertragers (55) mit dem Kondensator (20) des Kühlkreislaufs (17) gekoppelt ist.

12. Prüfkammer nach Anspruch 11,
**dadurch gekennzeichnet,**
**dass** das Kältemittel und das weitere Kältemittel gleichartig sind.

13. Prüfkammer nach Anspruch 10,
**dadurch gekennzeichnet,**
**dass** der Kühlkreislauf (17) als ein einstufiger Kühlkreislauf der Kühleinrichtung (16) ausgebildet ist.

14. Prüfkammer nach einem der Ansprüche 10 bis 13,
**dadurch gekennzeichnet,**
**dass** der Wärmeübertrager (18, 55) derart dimensioniert ausgebildet ist, dass das Kältemittel nur teilweise in dem Wärmeübertrager verdampfen kann.

15. Prüfkammer nach einem der Ansprüche 10 bis 14,
**dadurch gekennzeichnet,**
**dass** die Temperiervorrichtung (11) eine Heizeinrichtung (23) mit einer Heizung und einem Heiz-Wärmeübertrager in dem Prüfraum (12) aufweist.

16. Verwendung eines Kältemittels, wobei das Kältemittel aus einem Gemisch aus einem Masseanteil des Kältemittelgemischs R449A und einem Masseanteil mindestens eines weiteren Kältemittelgemischs besteht, wobei der Masseanteil R449A an dem Kältemittel 30 bis 70 Masseprozent beträgt, wobei der Masseanteil des weiteren Kältemittelgemischs an dem Kältemittel 30 bis 70 Masseprozent beträgt, wobei das weitere Kältemittelgemisch das Kältemittelgemisch R410A oder das Kältemittelgemisch R466A ist, wobei das Kältemittel zur Konditionierung von Luft in einem gegenüber einer Umgebung (14) verschließbaren und temperaturisolierten Prüfraum (12) einer Prüfkammer (10) zur Aufnahme von Prüfgut verwendet wird, wobei mittels einer Kühleinrichtung (16) einer Temperiervorrichtung (11) der Prüfkammer, mit einem Kühlkreislauf (17, 33) mit dem Kältemittel, einem Wärmeübertrager (18, 55), einem Verdichter (19, 52), einem Kondensator (20, 53) und einem Expansionsorgan (21, 54), eine Temperatur in einem Temperaturbereich von -42 °C bis +180 °C, bevorzugt -55 °C bis +180 °C, besonders bevorzugt -60 °C bis +180 °C, innerhalb des Prüfraums ausgebildet wird.

## Claims

1. A refrigerant for a cooling device (16) comprising a cooling circuit (17, 33) comprising at least one heat exchanger (18, 55) in which the refrigerant undergoes a phase change,
**characterized in that**
the refrigerant is a mixture of a mass fraction of refrigerant mixture R449A and a mass fraction of at least one other refrigerant mixture, the mass fraction of R449A in the refrigerant being 30 to 70 mass percent, the mass fraction of the other refrigerant mixture in the refrigerant being 30 to 70 mass percent, the other refrigerant mixture being refrigerant mixture R410A or refrigerant mixture R466A.

2. The refrigerant according to claim 1,
**characterized in that**
the mass fraction of R449A is 40 to 60 mass percent, the mass fraction of the other refrigerant mixture being 40 to 60 mass percent.

3. The refrigerant according to claim 2,
**characterized in that**
the mass fraction of R449A is 45 to 55 mass percent, the mass fraction of the other refrigerant mixture being 45 to 55 mass percent.

4. The refrigerant according to claim 3,
**characterized in that**
the mass fraction of R449A is 50 mass percent, the mass fraction of the other refrigerant mixture being 50 mass percent

5. The refrigerant according to any one of claims 1 to 3,
**characterized in that**
the refrigerant contains carbon dioxide (CO₂), difluoromethane (CH₂F₂), pentafluoroethane (C₂HF₅), 2,3,3,3-tetrafluoro-propene (C₃H₂F₄), 1,1,1,2-tetrafluoroethane (C₂H₂F₄), fluoromethane (CH₃F), ethane (C₂H₆), 1,1,-difluoroethene (C₂H₂F₂), ethene (C₂H₄), fluoroethene (C₂H₃F), ethyne (C₂H₂), propane (C₃H₈), propene (C₃H₆) and/or fluoroethane (CH₂FCH₃) as an additional component.

6. The refrigerant according to any one of the preceding claims,
**characterized in that**
the refrigerant is a zeotropic refrigerant.

7. The refrigerant according to any one of the preceding claims,
**characterized in that**
the refrigerant has a temperature glide in a range of 3 K to 9 K, preferably of 3 K to 6 K.

8. The refrigerant according to any one of the preceding claims,
**characterized in that**
the refrigerant has a relative CO2 equivalent of < 1700, preferably of < 1070, particularly preferably of < 900, over 100 years.

9. The refrigerant according to any one of the preceding claims,
**characterized in that**
the refrigerant is non-flammable.

10. A test chamber (10) for conditioning air, the test chamber comprising a temperature-insulated test space (12) which can be sealed against an environment (14) and serves to receive test material, and a temperature control device (11) for controlling the temperature of the test space, the temperature control device being configured to establish a temperature in a temperature range of ―42 °C to +180 °C within the test space, the temperature control device having a cooling device (16) comprising a cooling circuit (17, 33) comprising a refrigerant according to any one of the preceding claims, a heat exchanger (18, 55), a compressor (19, 52), a condenser (20, 53), and an expansion element (21, 54).

11. The test chamber according to claim 10,
**characterized in that**
the cooling device (16) comprises another cooling circuit (33) comprising another refrigerant, another compressor (52), another condenser (53), and another expansion element (54), the other cooling circuit being coupled with the condenser (20) of the cooling circuit (17) by means of an internal heat exchanger (55).

12. The test chamber according to claim 11,
**characterized in that**
the refrigerant and the other refrigerant are similar.

13. The test chamber according to claim 10,
**characterized in that**
the cooling circuit (17) is a single-stage cooling circuit of the cooling device (16).

14. The test chamber according to any one of claims 10 to 13,
**characterized in that**
the heat exchanger (18, 55) is dimensioned in such a manner that the refrigerant can only partially evaporate in the heat exchanger.

15. The test chamber according to any one of claims 10 to 14,
**characterized in that**
the temperature control device (11) has a heating device (23) comprising a heater and a heating heat exchanger in the test space (12).

16. A use of a refrigerant, wherein the refrigerant is composed of a mixture of a mass fraction of refrigerant mixture R449A and a mass fraction of at least one other refrigerant mixture, the mass fraction of R449A in the refrigerant being 30 to 70 mass percent, the mass fraction of the other refrigerant mixture in the refrigerant being 30 to 70 mass percent, the other refrigerant mixture being refrigerant mixture R410A or refrigerant mixture R466A, the refrigerant being used to condition air in a temperature-insulated test space (12) of a test chamber (10), the test space (12) being configured to be sealed against an environment (14) and serving to receive test material, a cooling device (16) of a temperature control device (11) of the test chamber, which comprises a cooling circuit (17, 33) comprising the refrigerant, a heat exchanger (18, 55), a compressor (19, 52), a condenser (20, 53) and an expansion element (21, 54), being used to establish a temperature in a temperature range of -42 °C to +180 °C, preferably -55 °C to +180 °C, particularly preferably -60 °C to +180 °C, within the test space.

## Revendications

1. Fluide frigorigène pour un dispositif de refroidissement (16) comprenant un circuit de refroidissement (17, 33) comprenant au moins un échangeur de chaleur (18, 55) dans lequel le fluide frigorigène est soumis à un changement de phase,
**caractérisé en ce que**
le fluide frigorigène est un mélange d'une fraction massique du mélange de fluides frigorigènes R449A et d'une fraction massique d'au moins un autre mélange de fluides frigorigènes, la fraction massique de R449A dans le fluide frigorigène étant de 30 à 70 pourcent en masse, la fraction massique de l'autre mélange de fluides frigorigènes dans le fluide frigorigène étant de 30 à 70 pourcent en masse, l'autre mélange de fluides frigorigènes étant le mélange de fluides frigorigènes R410A ou le mélange de fluides frigorigènes R466A.

2. Fluide frigorigène selon la revendication 1,
**caractérisé en ce que**
la fraction massique de R449A est de 40 à 60 pourcent en masse,
la fraction massique de l'autre mélange de fluides frigorigènes étant de 40 à 60 pourcent en masse.

3. Fluide frigorigène selon la revendication 2,
**caractérisé en ce que**
la fraction massique de R449A est de 45 à 55 pourcent en masse, la fraction massique de l'autre mélange de fluides frigorigènes étant de 45 à 55 pourcent en masse.

4. Fluide frigorigène selon la revendication 3,
**caractérisé en ce que**
la fraction massique de R449A est de 50 pourcent en masse, la fraction massique de l'autre mélange de fluides frigorigènes étant de 50 pourcent en masse

5. Fluide frigorigène selon l'une quelconque des revendications 1 à 3,
**caractérisé en ce que**
le fluide frigorigène contient du dioxyde de carbone (CO₂), du difluorométhane (CH₂F₂), du pentafluoroéthane (C₂HF₅), du 2,3,3,3-tétrafluoropropène (C₃H₂F₄), du 1,1,1,2-tétrafluoroéthane (C₂H₂F₄), du fluorométhane (CH₃F), de l'éthane (C₂H₆), du 1,1,-difluoroéthène (C₂H₂F₂), de l'éthène (C₂H₄), du fluoroéthène (C₂H₃F), de l'éthyne (C₂H₂), du propane (C₃H₈), du propène (C₃H₆) et/ou du fluoroéthane (CH₂FCH₃) comme composant additionnel.

6. Fluide frigorigène selon l'une quelconque des revendications précédentes,
**caractérisé en ce que**
le fluide frigorigène est un fluide frigorigène zéotropique.

7. Fluide frigorigène selon l'une quelconque des revendications précédentes,
**caractérisé en ce que**
le fluide frigorigène a un glissement de température dans une plage de 3 K à 9 K, de préférence de 3 K à 6 K.

8. Fluide frigorigène selon l'une quelconque des revendications précédentes,
**caractérisé en ce que**
le fluide frigorigène a un équivalent CO2 relatif de < 1700, de préférence de < 1070, de préférence particulière de < 900, sur 100 ans.

9. Fluide frigorigène selon l'une quelconque des revendications précédentes,
**caractérisé en ce que**
le fluide frigorigène est non inflammable.

10. Chambre d'essai (10) pour le conditionnement d'air, la chambre d'essai comprenant un espace d'essai (12) isolé thermiquement qui peut être étanché à un environnement (14) et qui sert à recevoir du matériau d'essai, et un dispositif de réglage de température (11) pour régler la température de l'espace d'essai, le dispositif de réglage de température étant configuré pour établir une température dans une plage de températures de -42 °C à +180 °C à l'intérieur de l'espace d'essai, le dispositif de réglage de température ayant un dispositif de refroidissement (16) comprenant un circuit de refroidissement (17, 33) comprenant un fluide frigorigène selon l'une quelconque des revendications précédentes, un échangeur de chaleur (18, 55), un compresseur (19, 52), un condenseur (20, 53) et un élément d'expansion (21, 54).

11. Chambre d'essai selon la revendication 10,
**caractérisé en ce que**
le dispositif de refroidissement (16) comprend un autre circuit de refroidissement (33) comprenant un autre fluide frigorigène, un autre compresseur (52), un autre condenseur (53) et un autre élément d'expansion (54), l'autre circuit de refroidissement étant connecté au condenseur (20) du circuit de refroidissement (17) par l'intermédiaire d'un échangeur de chaleur interne (55).

12. Chambre d'essai selon la revendication 11,
**caractérisé en ce que**
le fluide frigorigène et l'autre fluide frigorigène sont similaires.

13. Chambre d'essai selon la revendication 10,
**caractérisé en ce que**
le circuit de refroidissement (17) est un circuit de refroidissement à une étage du dispositif de refroidissement (16).

14. Chambre d'essai selon l'une quelconque des revendications 10 à 13,
**caractérisé en ce que**
l'échangeur de chaleur (18, 55) est dimensionné de telle manière que le fluide frigorigène ne peut évaporer que partiellement dans l'échangeur de chaleur.

15. Chambre d'essai selon l'une quelconque des revendications 10 à 14,
**caractérisé en ce que**
le dispositif de réglage de température (11) a un dispositif chauffant (23) comprenant un chauffage et un échangeur de chaleur chauffant dans l'espace d'essai (12).

16. Utilisation d'un fluide frigorigène, dans laquelle le fluide frigorigène se compose d'un mélange d'une fraction massique du mélange de fluides frigorigènes R449A et d'une fraction massique d'au moins un autre mélange de fluides frigorigènes, la fraction massique de R449A dans le fluide frigorigène étant de 30 à 70 pourcent en masse, la fraction massique de l'autre mélange de fluides frigorigènes dans le fluide frigorigène étant de 30 à 70 pourcent en masse, l'autre mélange de fluides frigorigènes étant le mélange de fluides frigorigènes R410A ou le mélange de fluides frigorigènes R466A, le fluide frigorigène étant utilisé pour le conditionnement d'air dans un espace d'essai (12) d'une chambre d'essai (10), l'espace d'essai (12) étant isolé thermiquement et configuré pour être étanché à un environnement (14) et servant à recevoir du matériau d'essai, un dispositif de refroidissement (16) d'un dispositif de réglage de température (11) de la chambre d'essai, qui comprend un circuit de refroidissement (17, 33) comprenant le fluide frigorigène, un échangeur de chaleur (18, 55), un compresseur (19, 52), un condenseur (20, 53) et un élément d'expansion (21, 54), étant utilisé pour établir une température dans une plage de températures de -42 °C à +180 °C, de préférence de -55 °C à +180 °C, de préférence particulière de -60 °C à +180 °C, à l'intérieur l'espace d'essai.
